# EUROPEAN PATENT SPECIFICATION

(11) **EP 1 791 316 B1**
(45) Date of publication and mention of the grant of the patent: **21.05.2008**
(21) Application number: 05111192.0
(22) Date of filing: 23.11.2005
(51) Int. Cl.: H04L 29/06, H04L 12/22, H04L 12/58

(54) **E-mail with secure message parts**
E-mail mit sicheren Nachrichtenteilen
E-mail avec des parties du message sécurisées

(43) Date of publication of application: 30.05.2007
(73) Proprietor: Research In Motion Limited, Waterloo, Ontario N2L 3W8 (CA)
(72) Inventor: Brown, Michael K., Kitchener, Ontario N2M 2Z2 (CA); Kirkup, Michael, Kitchener, Ontario N2J 4Y3 (CA); Brown, Michael S., Waterloo, Ontario N2K 4B1 (CA); Fu, Runbo, Kanata, Ontario K2M 2X3 (CA)
(74) Representative: Rickard, David John

(56) References cited:
- EP-A- 1 365 340
- WO-A-20/04107687
- US-B1- 6 769 067

## Description

The present invention relates to e-mails that have secure message parts and, in particular, to methods and systems for keeping secure message parts of e-mails protected.

Handheld electronic devices are commonly used to store and display messages. Devices that are enabled for wireless communication may also be used for sending and receiving messages. Where possible, the devices have been provided with a messaging application having a user interface similar to the user interface found for similar applications on a desktop computer. Also, some of the messaging applications that run on handheld electronic devices have mechanisms to reduce the risk of outbound e-mails having their contents exposed by way of illicit interception. Possible mechanisms include encryption software for creating encrypted e-mails.

In addition to encrypting e-mails, it is possible that the security risk can be reduced further by additional means. For example, through the use of PGP^{™} (Pretty Good Privacy) software, it is possible to mark a message so that it can only be viewed (in the PGP^{™} application) with a "secure" viewer. Forcing the message to be viewed in this viewer means the message will be viewed in a tempest resistant font. A possible limitation of this PGP^{™} method is that it only addresses how to view certain data at the node of the message receiver.

US6769067 discloses a receiver which receives a first message from a forwarder. A second message is received as an attachment to the first message. The second message is associated with an originator. A problem occurs in that the receiver may reply to the second message, inadvertently and, perhaps, insecurely, leaving the forwarder off the recipient list. The forwarder can take an action to prevent the receiver from replying to the originator of the e-mail message. In one embodiment, the forwarder protects the address of the originator with a password.

EP1365340 discloses a system that provides a user an opportunity for a second thought before forwarding a message. Additionally, a message originator may insert key words or attributes in a message so that a messaging client employed at the receiver, upon recognizing the key words or attributes, will not allow the message to be forwarded.

Accordingly, it would be advantageous to improve methods and systems for keeping secure message parts of e-mails protected.

### GENERAL

According to one example embodiment there is preferably provided a method of handling an electronically transmitted message having at least two parts with a higher level security part having a higher level of security than the other part, the method comprising: receiving a request, from a user, to perform an action on said higher level security part; extracting an attribute from said electronically transmitted message, said attribute indicating that said action is not permitted to be performed on said higher level security part; and informing said user that said action is not permitted to be performed on said higher level security part.

According to another example embodiment there is preferably provided a handheld electronic device having a messaging application permitting a recipient of an electronically transmitted message to take actions in relation to the message, said electronically transmitted message having at least two parts with a higher level security part having a higher level of security than the other part, the handheld device comprising: a display screen; a processor in electronic communication with said display screen, said processor capable of controlling operation of said display screen; and wherein: at least one computer readable medium storing code and in electronic communication with said processor, the code comprising: computer executable instructions for receiving a request, from a user, to perform an action on said higher level security part; computer executable instructions for extracting an attribute from said electronically transmitted message, said attribute indicating that said action is not permitted to be performed on said higher level security part; and computer executable instructions for informing said user that said action is not permitted to be performed on said higher level security part.

According to another example embodiment there is preferably provided a computer program product having a computer readable medium tangibly embodying computer executable instructions for implementing in a computing device the method of the invention.

### BRIEF DESCRIPTION OF THE DRAWINGS

Reference will now be made, by way of example, to the accompanying drawings which show example embodiments of the present invention, and in which:

Figure 1 shows a block diagram of a user device to which the present invention can be applied in an example embodiment;

Figure 2 shows, in diagrammatic form, a first screen shot of a possible messaging application for the device of Figure 1;

Figure 3 shows, in diagrammatic form, a second screen shot of the messaging application of Figure 2, the second screen shot being that of a displayed message;

Figure 4 shows, in diagrammatic form, a screen shot taken after a person tries to open an attachment of the displayed message;

Figure 5 shows, in diagrammatic form, a screen shot illustrating a message forwarding example with a message attachment being the message part marked with one or more action restrictions in this example; and

Figure 6 shows, in diagrammatic form, a screen shot illustrating an alternative message forwarding example with a portion of the message body being the message part marked with one or more action restrictions in this example.

Similar reference numerals may have been used in different figures to denote similar components.

### DESCRIPTION OF PREFERRED EMBODIMENTS

The following description of specific embodiments of the invention does not limit the implementation of the invention to any particular computer programming language or system architecture. The present invention is not limited to any particular operating system, mobile device architecture, or computer programming language. Moreover, although some of the embodiments described below include mobile devices, the present invention is not limited to mobile devices; rather, it may be embodied within a variety of user devices or terminals, including handheld devices, mobile telephones, personal digital assistants (PDAs), personal computers, audiovisual terminals, televisions, and other devices. One skilled in the art will appreciate that messaging applications can be installed on most of these user devices and terminals.

Any references herein to "messages" are not intended to be limited to e-mail, but should be understood to include other types of messages that one skilled in the art would understand to be possible in the context in which the term is being used. Other types of messages include text messages, audio messages, video messages, and other items, including calendar entries, tasks, and other date-related items.

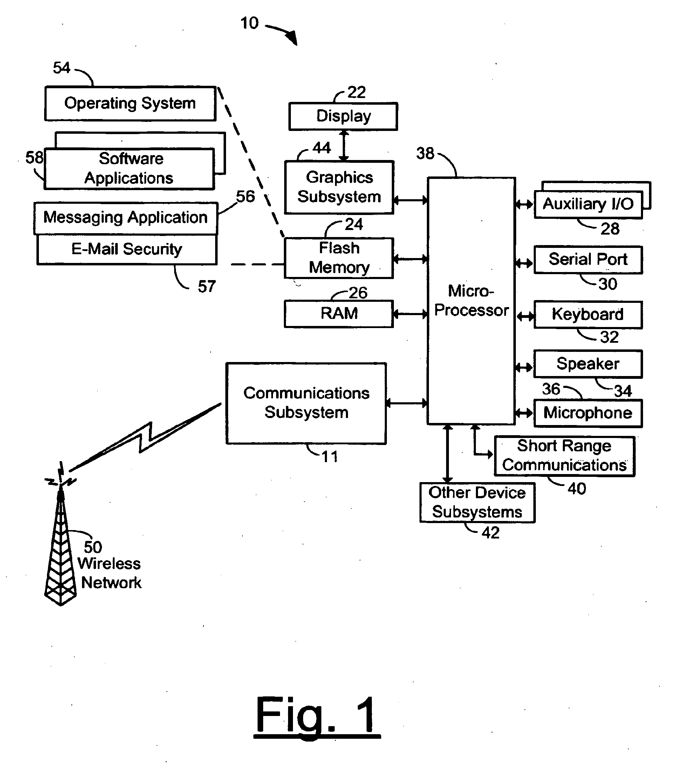

Referring now to the drawings, Figure 1 is a block diagram of a user device to which the present invention can be applied in an example embodiment. In the example embodiment, the user device is a two-way mobile communication device 10 having data and possibly also voice communication capabilities. In an example embodiment, the device 10 has the capability to communicate with other computer systems on the Internet. Depending on the functionality provided by the device 10, in various embodiments the device may be a data communication device, a multiple-mode communication device configured for both data and voice communication, a mobile telephone, a PDA enabled for wireless communication, or a computer system with a wireless modem, among other things.

In the illustrated embodiment, the device 10 includes a communication subsystem 11. In one embodiment, the communication subsystem 11 may include a receiver, a transmitter, and associated components such as one or more, preferably embedded or internal, antenna elements, and a processing module such as a digital signal processor (DSP). As will be apparent to those skilled in the field of communications, the particular design of the communication subsystem 11 will be dependent in part upon the communication network in which the device 10 is intended to operate.

Signals received by the device 10 from a wireless communication network 50 are input to the receiver of the communication subsystem 11, which may perform such common receiver functions as signal amplification, frequency down conversion, filtering, channel selection and the like. In a similar manner, signals to be transmitted are processed, including modulation and encoding for example, by the DSP and input to the transmitter for digital to analog conversion, frequency up conversion, filtering, amplification and transmission over the wireless communication network 50.

The device 10 includes a microprocessor 38 that controls the overall operation of the device. The microprocessor 38 interacts with the communications subsystem 11 and also interacts with further device subsystems such as a graphics subsystem 44, flash memory 24, random access memory (RAM) 26, auxiliary input/output (I/O) subsystems 28, serial port 30, keyboard or keypad 32, speaker 34, microphone 36, a short-range communications subsystem 40, and any other device subsystems generally designated as 42. The graphics subsystem 44 interacts with the display 22 and renders graphics and/or text upon the display 22.

Operating system software 54 and various software applications 58 used by the microprocessor 38 are, in one example embodiment, stored in a persistent store such as flash memory 24 or similar storage element. Those skilled in the art will appreciate that the operating system 54, software applications 58, or parts thereof, may be temporarily loaded into a volatile store such as RAM 26. It is contemplated that received communication signals may also be stored to RAM 26.

The microprocessor 38, in addition to its operating system functions, can enable execution of software applications 58 on the device. A predetermined set of software applications 58 which control basic device operations, including data and voice communication applications for example, will normally be installed on the device 10 during manufacture. Further software applications 58 may also be loaded onto the device 10 through the network 50, an auxiliary I/O subsystem 28, serial port 30, short-range communications subsystem 40 or any other suitable subsystem 42, and installed by a user in the RAM 26 or a non-volatile store for execution by the microprocessor 38. Such flexibility in application installation increases the functionality of the device and may provide enhanced on-device functions, communication-related functions, or both. For example, secure communication applications may enable electronic commerce functions and other such financial transactions to be performed using the device 10.

In a data communication mode, a received signal such as a text message or web page download will be processed by the communication subsystem 11 and input to the microprocessor 38, which will preferably further process the received signal for output to the display 22 through the graphics subsystem 44, or alternatively to an auxiliary I/O device 28. A user of device 10 may also compose data items within a software application 58, such as e-mail messages for example, using the keyboard 32 in conjunction with the display 22 and possibly an auxiliary I/O device 28 such as, for example, a thumbwheel. Such composed items may then be transmitted over a communication network through the communication subsystem 11.

The serial port 30 in Figure 1 would normally be implemented in a personal digital assistant (PDA)-type communication device for which synchronization with a user's desktop computer (not shown) may be desirable, but is an optional device component. Such a port 30 would enable a user to set preferences through an external device or software application and would extend the capabilities of the device by providing for information or software downloads to the device 10 other than through a wireless communication network.

A short-range communications subsystem 40 is a further component which may provide for communication between the device 10 and different systems or devices, which need not necessarily be similar devices. For example, the subsystem 40 may include an infrared device and associated circuits and components or a Bluetooth^{™} communication module to provide for communication with similarly enabled systems and devices. The device 10 may be a handheld device.

Wireless mobile network 50 is, in an example embodiment, a wireless packet data network, (e.g. Mobitex^{™} or DataTAC^{™}), which provides radio coverage to mobile devices 10. Wireless mobile network 50 may also be a voice and data network such as GSM (Global System for Mobile Communication) and GPRS (General Packet Radio System), CDMA (Code Division Multiple Access), or various other third generation networks such as EDGE (Enhanced Data rates for GSM Evolution) or UMTS (Universal Mobile Telecommunications Systems). In some example embodiments, network 50 is a wireless local area network (WLAN) operating, for example, in conformance with one or more IEEE 802.11 protocols. In some example embodiments, the device 10 is configured to communicate over both wireless wide are networks and wireless local area networks.

In one embodiment, the software resident on the device 10 includes a messaging application 56 for sending, receiving and displaying messages or other items, such as tasks, calendar items, etc. An example of a very well known software application similar to the messaging application 56 is the Microsoft Outlook^{™} software application produced by the Microsoft Corporation. There exists a variety of publications that provide instructions for developing and creating messaging applications. Furthermore, software is currently available for building messaging applications. Accordingly, code-level programming specifics need not be described herein in order for one skilled in the art to build a messaging application having any of the functionality disclosed herein. Associated with the messaging application 56 is an e-mail security module 57 for configuring the device 10 to perform at least some of the e-mail security functions described herein. In the presently described embodiment, module 57 is a sub-component of messaging application 56. However in alternative embodiments all or portions of module 57 may be part of another software application or may be a separate software application.

It is again noted that the present application is not limited to use in association with e-mail messages and may apply to other messages where possible, including SMS messages, and other "items", including calendar entries, task list entries, and other items having a date associated with them. References in the present application to "messages" or a "messaging application" should be understood to encompass and include possibilities within this wider range of items.

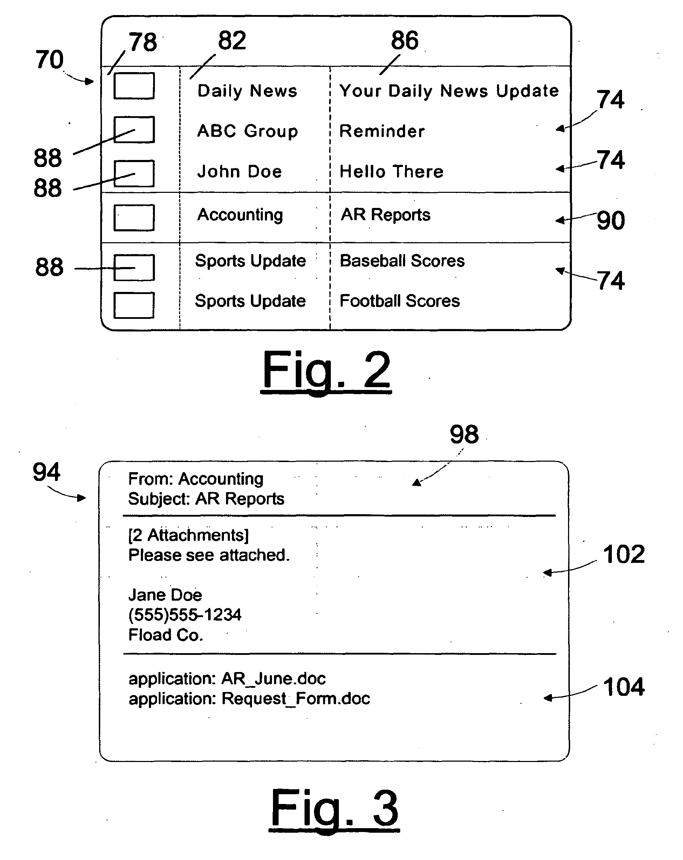

Referring to Figure 2, a screen shot 70 generated by an example embodiment of the messaging application 56 is illustrated. The screen shot 70 corresponds to what the display of a mobile communication device might look like after a user has requested that the messaging application 56 display received messages in a list. This is typically done by clicking on an icon or a particular list selection associated with a request to display inbox folder contents.

In the screen shot 70, a plurality of messages 74 are listed vertically. Going from left to right in the screen shot 70, there is a message icon column 78, a sender identifier column 82 and a message subject column 86. Icons 88 in the icon column 78 can provide information about the e-mails with which they are associated. For example, an icon 88 associated with an e-mail that has already been read can provide this information to the user by means of an appropriate graphical image displayed to the user (e.g. an envelope with its flap opened). Similarly an appropriate graphical image could be used for an e-mail that has not been read (e.g. an envelope with its flap closed). The columns 82 and 86 also provide information about the messages 74. In the column 82, the names of the people who sent the e-mails 74 are listed. In the column 86, the subject lines of the e-mails 74 are shown.

It will be understood that the display of the mobile communication device could show additional/fewer and/or different columns than those shown in Figure 2. Some examples of alternative columns are importance, flag status, presence of attachment(s), received date, and message size. Due to the typical width of the display of a mobile communication device, it will normally not be desirable to have a large number of columns, and it will normally be desirable to show the columns that provide the most useful information keeping in mind that the user is probably looking for a particular message at the stage shown in Figure 2.

Message 90 of the messages 74 has been highlighted by the user. The sender of the message 90 is Accounting, and the subject line of the message is "AR Reports". The user in this example now requests, using one or more of the input devices of his mobile communication device, that the message 90 be opened.

Figure 3 is a screen shot 94 of the displayed message 90. Message header 98 repeats the information of the message 90 contained in the columns 82 and 86 of the screen shot 70. It will be understood that the header 98 could show additional/less and/or different information than what is shown. Below the header 98 is a message section 102 that contains the text of the message, and the section 102 is commonly referred to as the message body. Below the message body 102 is a section 104 providing a description of two attachments to the message 90. The message 90 has three parts. One of the parts is the text of the message, and the other two parts are the two attachments.

In the present example, the user reads the message body 102. From reading the message body 102, the user learns that Jane Doe in accounting has sent him two files, in particular, two Word^{™} documents. Assuming the user is reading the message from top to bottom, the user then learns (after reading the section 104) that the two Word^{™} documents that Jane Doe has sent him are "AR_June.doc" and "Request_form.doc".

In the present example, the message body 102 and the two documents listed in the section 104 were encoded in the Multipurpose Internet Mail Extension (MIME) standard during the process by which the message was sent. MIME is an official Internet standard that specifies how messages should be formatted so that they can be exchanged between different message systems. MIME is also a specification for the format of non-text message attachments that allows the attachment to be sent over the Internet.

In the illustrated example, the conversion of attachments (such as the two attachments in the example e-mail) from MIME to files or vice versa is normally handled by the messaging application 56 (Figure 1). When the file is stored on the device 10, it is up to the operating system 54 to map one of the applications 58 to the file type.

When a MIME formatted message is processed by the messaging application 56, information is extracted from the message. Many different types of information can be extracted from messages, and some examples of possible types of extractable information are the content types in the message, body parts, how the message data is encoded, the version of the MIME standard that the message conforms to, the sender of the message, and the date and time the message was sent. Also, one skilled in the art will appreciate that information can be extracted from MIME attributes of a message.

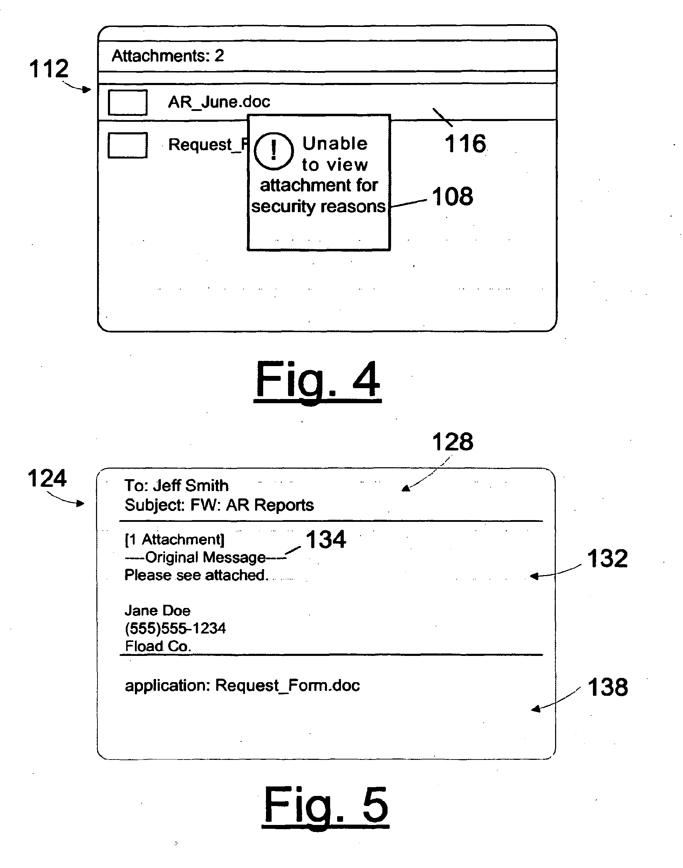

Continuing on with the example message from Accounting to the next screen shot shown in Figure 4, the messaging application 56 in this example embodiment offers the user the ability to proceed to a screen where the attachments of the message 90 are listed for selection. At this stage the screen is as illustrated in screen shot 112, except initially without dialog window 108. In the screen shot 112, message attachment 116, which is "AR_June.doc", is highlighted and ready for selection. (It will be kept in mind that the ways in which a user opens the attachments of a message vary depending on the messaging application. In some messaging applications, message attachments are opened by clicking on icons in the message body).

It will be understood that in some messaging system architectures within which the device 10 can operate, the example received message may require, when at least some parts of the message need to be reviewed, the outbound sending of these message parts through the communications subsystem 11 (Figure 1) to an attachment server. The purpose of the attachment server being that it formats and/or decodes various message parts for viewing on the device. This procedure however might have the potential of compromising intended level of security because there could be transmission of one or more message parts in a decoded (or unsatisfactorily coded) format over a public network during this procedure. For these example embodiments, the use of MIME attributes in relation to the message parts could enable prevention of undesired transmission of message parts to servers such as an attachment server.

Taking the message attachment 116 as an example, the user attempts to use one or more of the input devices of his mobile communication device to open the message attachment 116. The messaging application however has processed a MIME attribute which the messaging application interprets to mean that the attachment will not be sent off of the device. In this example, the attachment is not to be displayed to the user because it cannot be sent to the attachment server for decoding as a result of the attachment's MIME attribute being "Content-Forwarding: denied".
Conversely, the attachment would, in this example, be permitted to be sent to the attachment server, and thus could be displayed to the user if its MIME attribute was "Content-Forwarding: allowed".

Thus, for the above example, the message attachment 116 is not decoded for viewing on the device. Instead the dialog window 108 informs the user that the message attachment 116 cannot be viewed due to security reasons.

It will be understood that there are a variety of alternative ways in which the user could be made aware that his request offends a security precaution and that the message attachment 116 cannot be viewed. For example, there could simply be a beep that sounds when the user requests to open the message attachment 116.

Still with reference to the example message from Accounting, Figure 5 is a screen shot 124 illustrating a forwarded message composition derived from the original message 90. It will be understood that the request by the device user in this example to forward a message can in fact be viewed as a bundle of requests including a request to forward the message text, a request to forward the "AR_June.doc" attachment and a request to forward the "Request_Form.doc" attachment.

As indicated in message header 128, the forwarded message is going to be sent to a person named Jeff Smith. The message body 102 of the original message 90 is contained within message body 132 of the forwarded message. An indicator or separator line 134 indicates where the message body 102 of the original message 90 begins.

"AR_June.doc" is missing from the message to be forwarded. The user of the mobile communication device recognizes this because that attachment is not shown in region 138 of the device's display. Along with the attachment not being shown in the region 138, it will be understood that there are a number of additional ways in which the user could be made aware that "AR_June.doc" will not be forwarded. For example, a dialog window could appear to warn the user.

The attachment does not go with the forwarded message because the messaging application has determined that a MIME attribute for the attachment indicates that content forwarding is not allowed with respect to that attachment. In an example embodiment, the attachment is not to be included with the forwarded message if its MIME attribute is "Content-Forwarding: denied", and the attachment is permitted to be included with the forwarded message if its MIME attribute is "Content-Forwarding: allowed". Parts of a message having the MIME attribute "Content-Forwarding: denied" have a higher level of security than those parts of the message having the MIME attribute "Content-Forwarding: allowed". With respect to the example message from Accounting, the "AR_June.doc" part of the message has a higher level of security than the message text and "Request_Form.doc" message parts.

Forwarding prevention of one or more message parts (such as the "AR_June.doc" attachment) may reduce security concerns in various situations. As an example, security concerns may be reduced when the original message is in a secure format and the derived message is sent out in a format that is not secure.

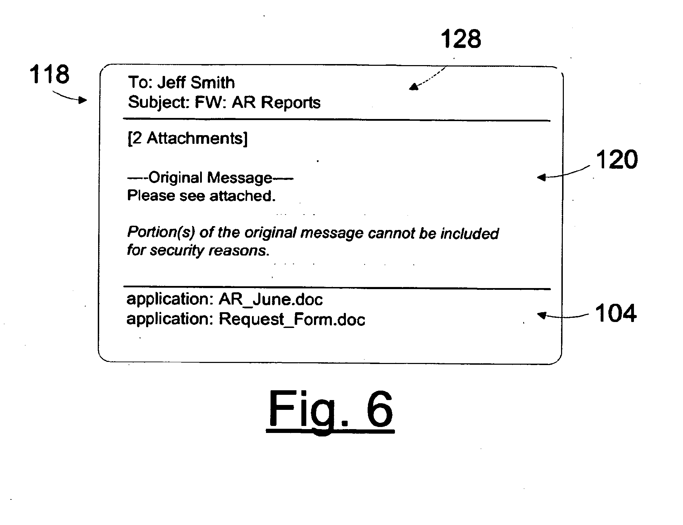

Still with reference to the example message from accounting, Figure 6 is a screen shot 118 illustrating another example of a forwarded message composition derived from the original message 90. In this example, content forwarding is applied to a portion of the message body of the e-mail from accounting. In particular, the name and contact information of the original message are missing from the forwarded message composition because this portion was marked with the MIME attribute "Content Forwarding: denied". Also, in the illustrated example, the user of the device 10 is presented with an explanation embedded in the message notifying the user that the protected portion of the message body has not been included in the forwarded message composition. The user could also be made aware in alternative ways that a security precaution has been offended and that one or more protected portions of the message were not included in the forwarded message composition. For example, there could simply be a beep that sounds at some point during the message composition process, or a dialog box could pop up to notify the user that one or more portions of the message were not included in the forwarded message composition.

Although the examples illustrated in Figures 5 and 6 are forwarded message composition examples, it will be understood that, for consistency, it would be desirable to have the messaging application behave in the same manner with respect to a reply-to message composition. Although many messaging applications are configured by default to not have the original attachments included in a reply-to message composition, it could be that (like in the Figure 6 example) the message text itself is to be protected.

It will be understood that action prevention in relation to higher security level parts is not limited to those actions that involve content forwarding off of the mobile communication device or other message processing machine. For example, the action prevention in relation to a higher security level part could be preventing the display of the higher level security part on a display in those situations when the message part does not even need to be sent to a server for decoding. This might be done if, for example, there were concerns about not being able to view the higher level security part in a font believed to make displayed text more tempest resistant. As another example, the e-mail security module 57 could be configured to force the display of any higher level security part in a font believed to make displayed text more tempest resistant. For instance, a user of the device 10 might have preconfigured the messaging application 56 to have the text in the message body 102 (Figure 3) displayed in a font of his liking, but that font might not be the font believed to make displayed text more tempest resistant. Consequently, the module 57 could prevent the action of having the text in the message body 102 displayed in the default font, the text instead being displayed in a font perceived to be more tempest resistant.

The information provided by the MIME attribute need not be as simple as "denied" and "allowed". For example, a more granular system could be used to give finer detail on when to include the particular message part. In a classification system, there could be a number of levels of security. For instance, there could be four levels of security such as classified, confidential, secret and top secret, with top secret as the top level and classified as the bottom level. The messaging application of the user's mobile communication device could then be set up so that certain restrictions only apply above a certain level. For example, a message part having a security level of confidential or lower might be included in a forwarded message, but a message part having a security level of secret or higher might not be included in the forwarded message. In this case the threshold would be between confidential and secret. Of course any number of levels of security could be chosen for a classification system (e.g. three, four, five, etc.), and the levels between which the threshold(s) would be set could vary from one user to another.

One skilled in the art will appreciate that there might be situations where a server in communication with the user's mobile communication device could have access to the user's private keys. In such cases, the previously described MIME processing could possibly be done at the server rather than at the mobile communication device.

It will be understood that the needed security information about a message part could be obtained in some other way besides scanning the MIME header of a message part. For instance, in the case where the message part is an e-mail attachment, the information could be contained in the actual contents of the e-mail attachment. The messaging application in this embodiment would not scan the MIME header of the e-mail attachment, but would instead extract the needed information from the e-mail attachment part, for example.

The present invention may be embodied in other specific forms without departing from the essential characteristics thereof. Certain adaptations and modifications of the invention will be obvious to those skilled in the art. Therefore, the above discussed embodiments are considered to be illustrative and not restrictive, the scope of the invention being indicated by the appended claims rather than the foregoing description, and all changes which come within the meaning and range of equivalency of the claims are therefore intended to be embraced therein.

## Claims

1. A method of handling an electronically transmitted message (74) having at least two parts (102,116) with a higher level security part (116) having a higher level of security than the other part (102), the method comprising:
receiving a request, from a user, to perform an action on said higher level security part (116);
extracting an attribute from said electronically transmitted message (74), said attribute indicating that said action is not permitted to be performed on said higher level security part (116); and
informing said user that said action is not permitted to be performed on said higher level security part (116).

2. A method as claimed in claim 1, wherein said message (74) is an email message.

3. A method as claimed in claim 1 or claim 2, wherein said higher level security part (116) is an email attachment.

4. A method as claimed in claim 3, wherein said action is displaying said email attachment on a handheld device display (22).

5. A method as claimed in any one of claim 1, claim 2 or claim 3, wherein said action comprises sending said higher level security part (116) to an attachment server for decoding.

6. A method as claimed in any one of claim 1, claim 2 or claim 3, wherein said action comprises forwarding said higher level security part (116) through a communications medium (50).

7. A method as claimed in claim 6, wherein said communications medium comprises a portion of the Internet.

8. A method as claimed in any one of claims 1 to 7, wherein said informing comprises displaying a message on a handheld device display (22).

9. A computer program product having a computer readable medium tangibly embodying computer executable instructions for implementing in a computing device (10) the method of any one of claims 1 to 8.

10. A handheld electronic device (10) having a messaging application (56) permitting a recipient of an electronically transmitted message (74) to take actions in relation to the message (74), said electronically transmitted message (74) having at least two parts (102, 116) with a higher level security part (116) having a higher level of security than the other part (102), the handheld device (10) comprising:
a display screen (22);
a processor (38) in electronic communication with said display screen (22), said processor (38) capable of controlling operation of said display screen (22);
and wherein:
at least one computer readable medium storing code and in electronic communication with said processor, the code comprising:
computer executable instructions for receiving a request, from a user, to perform an action on said higher level security part (116);
computer executable instructions for extracting an attribute from said electronically transmitted message (74), said attribute indicating that said action is not permitted to be performed on said higher level security part (116); and
computer executable instructions for informing said user that said action is not permitted to be performed on said higher level security part (116).

11. A handheld device (10) as claimed in claim 10, wherein said processor is adapted to implement a classification system that is arranged to determine whether said action is permitted in relation to each of said at least two parts.

12. A handheld device (10) as claimed in claim 11, wherein said classification system comprises at least three levels of security.

13. A handheld device (10) as claimed in claim 12, wherein one of said three levels of security is associated with said higher level security part (116) of the message (74) and a different and lower one of said levels of security is associated with said other part (102) of the message (74).

14. A handheld device (10) as claimed in any one of claims 10 to 13, wherein said higher level security part (116) of the message (74) is an attached word processing document and said other part (102) of the message (74) is message text.

15. A communication system comprising a plurality of handheld electronic devices (10) according to any one of claims 10 to 14.

## Patentansprüche

1. Verfahren zum Handhaben einer elektronisch übertragenen Nachricht (74), die über mindestens zwei Teile (102, 116) verfügt, wobei ein Teil mit höherer Sicherheitsstufe (116) eine höhere Sicherheitsstufe aufweist als der andere Teil (102), das Verfahren umfassend:
Empfangen einer Anforderung von einem Benutzer zur Durchführung einer Aktion an dem Teil mit höherer Sicherheitsstufe (116);
Extrahieren eines Attributs aus der elektronisch übertragenen
Nachricht (74), wobei dieses Attribut anzeigt, dass die Durchführung der Aktion an dem Teil mit höherer Sicherheitsstufe (116) nicht zulässig ist; und
Informieren des Benutzers, dass die Durchführung der Aktion an dem Teil mit höherer Sicherheitsstufe (116) nicht zulässig ist.

2. Verfahren gemäß Anspruch 1, wobei die Nachricht (74) eine E-Mail-Nachricht ist.

3. Verfahren gemäß Anspruch 1 oder Anspruch 2, wobei der Teil mit höherer Sicherheitsstufe (116) ein E-Mail-Anhang ist.

4. Verfahren gemäß Anspruch 3, wobei die Aktion das Anzeigen des E-Mail-Anhangs auf einem Handheld-Gerätedisplay (22) ist.

5. Verfahren gemäß einem von Anspruch 1, Anspruch 2 oder Anspruch 3, wobei die Aktion das Senden des Teils mit höherer Sicherheitsstufe (116) zu einem Anhang-Server zur Decodierung umfasst.

6. Verfahren gemäß einem von Anspruch 1, Anspruch 2 oder Anspruch 3, wobei die Aktion das Weiterleiten des Teils mit höherer Sicherheitsstufe (116) über ein Kommunikationsmedium (50) umfasst.

7. Verfahren gemäß Anspruch 6, wobei das Kommunikationsmedium einen Abschnitt des Internets umfasst.

8. Verfahren gemäß einem der Ansprüche 1 bis 7, wobei das Informieren das Anzeigen einer Nachricht auf einem Handheld-Gerätedisplay (22) umfasst.

9. Computerprogrammprodukt, das ein computerlesbares Medium aufweist, welches computerausführbare Befehle handfest verkörpert, um das Verfahren gemäß einem der Ansprüche 1 bis 8 in einem Computergerät (10) zu implementieren.

10. Elektronisches Handheld-Gerät (10), das über eine Messaging-Anwendung (56) verfügt, die es einem Empfänger einer elektronisch übertragenen Nachricht (74) ermöglicht, Aktionen in Bezug auf die Nachricht (74) durchzuführen, wobei die elektronisch übertragene Nachricht (74) über mindestens zwei Teile (102, 116) verfügt, wobei ein Teil mit höherer Sicherheitsstufe (116) eine höhere Sicherheitsstufe aufweist als der andere Teil (102), das Handheld-Gerät (10) umfassend:
einen Display-Bildschirm (22);
einen Prozessor (38), der sich in elektronischer Kommunikation mit dem Display-Bildschirm (22) befindet, wobei der Prozessor (38) in der Lage ist, den Betrieb des Display-Bildschirms (22) zu steuern;
und wobei:
mindestens ein computerlesbares Medium Code speichert und sich in elektronischer Kommunikation mit dem Prozessor befindet, der Code umfassend:
computerausführbare Befehle zum Empfangen einer Anforderung von einem Benutzer zur Durchführung einer Aktion an dem Teil mit höherer Sicherheitsstufe (116); computerausführbare Befehle zum Extrahieren eines Attributs aus der elektronisch übertragenen Nachricht (74), wobei dieses Attribut anzeigt, dass die Durchführung der Aktion an dem Teil mit höherer Sicherheitsstufe (116) nicht zulässig ist; und
computerausführbare Befehle zum Informieren des Benutzers, dass die Durchführung der Aktion an dem Teil mit höherer Sicherheitsstufe (116) nicht zulässig ist.

11. Handheld-Gerät (10) gemäß Anspruch 10, wobei der Prozessor dazu angepasst ist, ein Klassifikationssystem zu implementieren, das dazu eingerichtet ist, zu ermitteln, ob die Aktion in Bezug auf jeden der mindestens zwei Teile zulässig ist.

12. Handheld-Gerät (10) gemäß Anspruch 11, wobei das Klassifikationssystem mindestens drei Sicherheitsstufen umfasst.

13. Handheld-Gerät (10) gemäß Anspruch 12, wobei eine der drei Sicherheitsstufen dem Teil mit höherer Sicherheitsstufe (116) der Nachricht (74) zugeordnet ist und eine andere und niedrigere der Sicherheitsstufen dem anderen Teil (102) der Nachricht (74) zugeordnet ist.

14. Handheld-Gerät (10) gemäß einem der Ansprüche 10 bis 13, wobei der Teil mit höherer Sicherheitsstufe (116) der Nachricht (74) ein angehängtes Textverarbeitungsdokument und der andere Teil (102) der Nachricht (74) Nachrichtentext ist.

15. Kommunikationssystem, umfassend eine Vielzahl von elektronischen Handheld-Geräten (10) gemäß einem der Ansprüche 10 bis 14.

## Revendications

1. Un procédé de traitement d'un message transmis électroniquement (74) possédant au moins deux parties (102, 116) avec une partie à niveau de sécurité plus élevé (116) possédant un niveau de sécurité plus élevé que l'autre partie (102), le procédé comprenant les opérations suivantes :
la réception d'une demande, provenant d'un utilisateur, visant à exécuter une action sur ladite partie à niveau de sécurité plus élevé (116) ;
l'extraction d'un attribut dudit message transmis électroniquement (74), ledit attribut indiquant que ladite action n'est pas autorisée à être exécutée sur ladite partie à niveau de sécurité plus élevé (116) ; et
le signalement audit utilisateur que ladite action n'est pas autorisée à être exécutée sur ladite partie à niveau de sécurité plus élevé (116).

2. Un procédé selon la Revendication 1, où ledit message (74) est un message électronique.

3. Un procédé selon la Revendication 1 ou 2, où ladite partie à niveau de sécurité plus élevé (116) est une pièce jointe de message électronique.

4. Un procédé selon la Revendication 3, où ladite action est l'affichage de ladite pièce jointe de message électronique sur un écran de dispositif portatif (22).

5. Un procédé selon l'une quelconque des Revendications 1, 2 ou 3, où ladite action comprend l'envoi de ladite partie à niveau de sécurité plus élevé (116) à un serveur de pièces jointes pour décodage.

6. Un procédé selon l'une quelconque des Revendications 1, 2 ou 3, où ladite action comprend la transmission de ladite partie à niveau de sécurité plus élevé (116) par l'intermédiaire d'un moyen de communication (50).

7. Un procédé selon la Revendication 6, où ledit moyen de communication comprend une portion de l'Internet.

8. Un procédé selon l'une quelconque des Revendications 1 à 7, où ledit signalement comprend l'affichage d'un message sur un écran de dispositif portatif (22).

9. Un produit de programme informatique possédant un support lisible par ordinateur incorporant de manière tangible des instructions exécutables par ordinateur destinées à mettre oeuvre sur un dispositif informatique (10) le procédé selon l'une quelconque des Revendications 1 à 8.

10. Un dispositif électronique portatif (10) possédant une application de messagerie (56) permettant à un destinataire d'un message transmis électroniquement (74) d'exécuter des actions en relation avec le message (74), ledit message transmis électroniquement (74) possédant au moins deux parties (102, 116) avec une partie à niveau de sécurité plus élevé (116) possédant un niveau de sécurité plus élevé que l'autre partie (102), le dispositif portatif (10) comprenant :
un écran d'affichage (22) ;
un processeur (38) en communication électronique avec ledit écran d'affichage (22), ledit processeur (38) étant capable de commander le fonctionnement dudit écran d'affichage (22) ;
et où :
au moins un support lisible par ordinateur contient du code et est en communication électronique avec ledit processeur, le code comprenant :
des instructions exécutables par ordinateur destinées à recevoir une demande, provenant d'un utilisateur, visant à exécuter une action sur ladite partie à niveau de sécurité plus élevé (116) ;
des instructions exécutables par ordinateur destinées à extraire un attribut dudit message transmis électroniquement (74), ledit attribut indiquant que ladite action n'est pas autorisée à être exécutée sur ladite partie à niveau de sécurité plus élevé (116); et
des instructions exécutables par ordinateur destinées à informer ledit utilisateur que ladite action n'est pas autorisée à être exécutée sur ladite partie à niveau de sécurité plus élevé (116).

11. Un dispositif portatif (10) selon la Revendication 10, où ledit processeur est adapté de façon à mettre en oeuvre un système de classification qui est agencé de façon à déterminer si ladite action est autorisée en relation avec chacune desdites au moins deux parties.

12. Un dispositif portatif (10) selon la Revendication 11, où ledit système de classification comprend au moins trois niveaux de sécurité.

13. Un dispositif portatif (10) selon la Revendication 12, où l'un desdits trois niveaux de sécurité est associé à ladite partie à niveau de sécurité plus élevé (116) du message (74) et où l'un desdits niveaux de sécurité différent ou moins élevé est associé à ladite autre partie (102) du message (74).

14. Un dispositif portatif (10) selon l'une quelconque des Revendications 10 à 13, où ledit niveau de sécurité plus élevé (116) du message (74) est un document de traitement de texte joint et ladite autre partie (102) du message (74) est du texte de message.

15. Un système de communication comprenant une pluralité de dispositifs électroniques portatifs (10) selon l'une quelconque des Revendications 10 à 14.
